# EUROPEAN PATENT APPLICATION

(11) **EP 2 264 382 A2**
(43) Date of publication of application: **22.12.2010**
(21) Application number: 10165928.2
(22) Date of filing: 15.06.2010
(51) Int. Cl.: F25B 13/00

(54) **Vapor compression reversible cycle heat pump**

(30) Priority: 16.06.2009 IT MI20091056
(71) Applicant: Climaveneta S.p.A., 31100 Treviso (IT)
(72) Inventor: Sormani, Giancarlo, 35128, Padova (IT); Marsan, Pierluigi, 36056, Belvedere di Tezze sul Brenta (Vicenza) (IT)
(74) Representative: Rapisardi, Mariacristina

(57) **Abstract**

Vapor compression reversible cycle heat pump (1) comprising at least a first heat exchange unit (2) between the cooling refrigerant and a first fluid for a user, the first heat exchange unit (2) being capable of operating as a capacitor for transferring heat energy from the cooling refrigerant to the first fluid in the direct operating cycle of the heat pump (1), at least a second heat exchange unit (3) between the refrigerant and at least a second fluid having a temperature lower than the first fluid, the second heat exchange unit (3) being capable of operating as evaporator to transfer heat from the second liquid to the cooling refrigerant in the direct operating cycle of the heat pump (I), at least a compression unit (4) of the refrigerant, at least an expansion unit (5) of the refrigerant, wherein the second heat exchange unit (3) comprises at least an air heat exchanger (6) and at least a water heat exchanger (7), and wherein switching means (8) capable of alternatively and/or concurrently selecting the air heat exchanger (6) and/or the water heat exchange (7) for implementing the cycle are provided.

## Description

The present invention refers to a vapor compression reversible cycle heat pump.

A heat pump is a thermo-cooling unit able to continuously remove heat from a source at a temperature lower than the external one (reverse working, in cooling mode) and/or able to provide for external utilization heat taken from a heat source at a lower one temperature (direct working, in heat pump mode).

In order to properly work, the heat pump needs, according to the second principle of thermodynamics, a tank towards which the heat in excess is directed, when it works in reverse mode, or a source from which heat is removed, when it works in direct mode.

The sources /tanks normally used are the air or the water.

The heat pump which the present invention is referred to may also be of the multi-purpose type wherein a water recovery exchanger is further foreseen that can work either as an evaporator or as a capacitor according also to the working mode.

A traditional heat reversible air pump generally comprises a water exchanger for users, an air disposal exchanger provided with electrical fans, at least one compressor, and one or more laminating elements.

During reverse working, generally during summer time, the heat reversible air pump removes heat from water, cooling it for users, and rejects it to the external air through the air exchanger. The water exchanger works as an evaporator and the air exchanger, generally constituted by coils, works as a capacitor,

During direct working, generally during winter time, the heat reversible air pump removes heat from air through the coils and transfer it to the water, heating it for the users. The water exchanger works as a capacitor and the coils act as evaporator.

The major possible defects of the traditional heat reversible air pumps are the possible inefficiency linked to the low coefficients of heat exchange with air, the possible inefficiency linked to the consumption of the fans and their wear, the noise connected to the fan working, the possibility that the coils become dirty reducing the heat exchange coefficient, the necessity to interrupt the heat pump working for occasional coils and/or fans maintaining working, the possibility that, when working in direct mode with air temperatures close to zero centigrade, ice layers which decrease the exchange coefficient with water are formed on the coils, the need to periodically deice to eliminate the eventual ice formed therein, the possible inefficiency of the deicing systems, the possible discontinuity of hot water supply to the users, the possible wear, liquid return and lack of oil to the compressors when a deicing is done with cycle inversion, the working field limited by the external environment conditions, and the reciprocal negative interferences between eventual close around heat pumps.

A traditional heat reversible water pump generally differs from a traditional heat reversible air pump substantially for the presence of a water exchange disposal, rather than an air one.

The circuit of the water exchanger disposal can be provided with, according to the situation, water from ground, well, river, sea, various types of geothermic probes which exchange heat with the ground, evaporative towers, dry cooler, circuits cooled/heated by other thermo-cooling units or other systems such as boilers, solar implants, etc The major possible shortcomings of conventional heat reversible water pumps consist in the need to have water at the proper temperature for the disposal / source on a continuing basis, in the possible design defects or malfunctions of the circuit disposal / source, consumption and possible wear of the pumping system for the disposal/source circuit, law limitation (for example, legionella), costs and consumption of eventual evaporative towers, consumption, decay performance and plant complexity associated with the use of dry-cooler with water or water glycol, the difficulty and costs in obtaining and maintaining licenses for the use of ground water, water of well, river, sea, ecc., in the temporal and geographical variability of the laws in terms of concessions, maximum/minimum temperature limits returned to the waste disposal system, in the discharge limits and possible design defects of any geothermal probe systems, in the possible drainage or pollution of the water used in the disposal/source system, in possible disruptions or seasonal variability in water flow from the circuit used for the disposal/source circuit, in the need to interrupt the operation of the unit for service at the disposal/source circuit, and the difficulty to coexist on the same disposal /source circuit units with different operating systems

Therefore, the technical object of the present invention is to realize a vapor compression reversible cycle heat pump which allows to eliminate the technical drawbacks present in the state of the art.

Under the technical task, one object of the invention is to realize a vapor compression reversible cycle heat pump having a high utility flexibility, with high efficiency and reliable, and having the maximum performance.

The technical task, these and other objects, according to the present invention are obtained by realizing a vapor compression reversible cycle heat pump according to claim 1.

Additional characteristics of the present invention are further shown in the succeeding claims.

Further characteristics and advantages of the invention will become more clear from the description of a preferred but non exclusive embodiment of a vapor compression reversible cycle heat pump according to the invention, shown at illustrative and not limited example in the enclosed drawings, wherein:

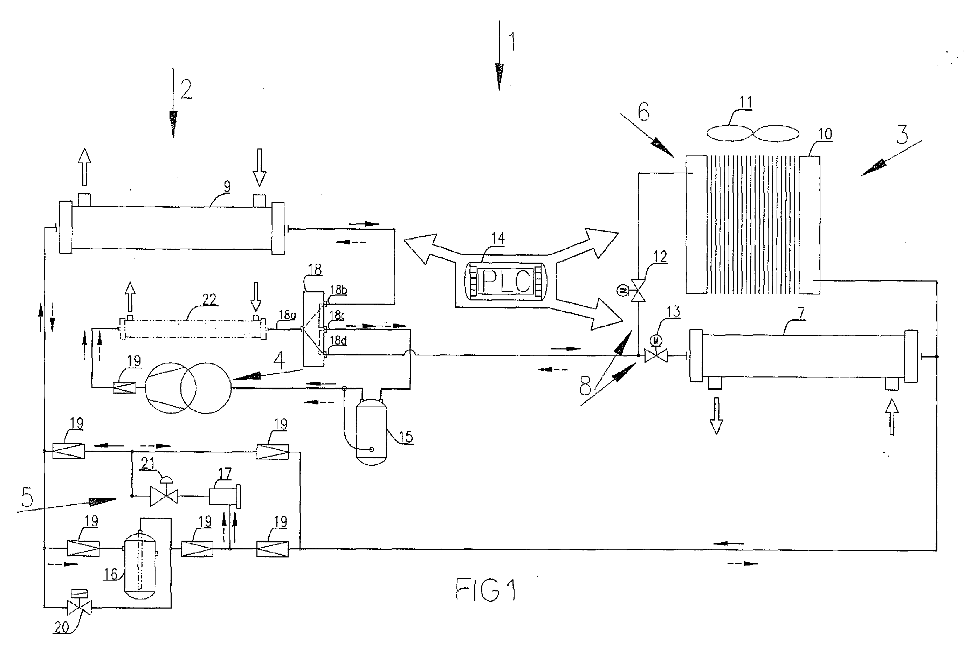

Figure 1 shows a possible implant diagram of the heat pump according to the invention.

With reference to figure 1, the vapor compression reversible cycle heat pump 1 comprises at least a first heat exchange unit 2 between the cooling refrigerant and a first fluid for a user, at least a second heat exchange unit 3 between said refrigerant and at least a second fluid having a temperature lower than said first fluid, at least a compression unit 4 of the refrigerant, and at least an expansion unit 5 of the refrigerant comprising in particular at least one laminating element 21.

The first heat exchange unit 2 is able to operate as a capacitor for transferring heat energy from the cooling refrigerant to the first fluid in the direct operating cycle of the heat pump.

The second heat exchange unit 3 is able to operate as evaporator to transfer heat energy from the second liquid to the cooling refrigerant in the direct operating cycle of the heat pump 1.

In Figure 1 continuous arrows show the circuit of the refrigerant in the reverse working way of the heat pump 1, while dotted arrows show the circuit of the refrigerant in the direct working way of the heat pump 1,

Advantageously, the second heat exchange unit 3 comprises at least an air heat exchanger 6 and at least a water heat exchanger 7.

In the reverse working circuit of the heat pump 1 the air heat exchanger 6 and the water heat exchanger 7 are able to remove heat energy transferring it from the cooling refrigerant to the second fluid.

Switching means 8 able to alternatively and/or concurrently select the air heat exchanger 6 and/or the water heat exchange 7 for implementing said cycle are further provided.

Preferably, in the circuit of the cooling refrigerant the air heat exchanger 6 and the water heat exchange 7 are connected in parallel.

In such a case, the switching means 8 comprise a first intercepting valve 12 in the derivation of the circuit of the cooling refrigerant wherein the air heat exchanger 6 is located, and a second intercepting valve 13 in the derivation of the circuit of said cooling refrigerant wherein said water heat exchanger 7 is located.

The first heat exchange unit 2 comprises a water switching 9.

The first heat exchange unit 1 further comprises an electronic controller 14 in communication with the switching means 8 for their automatic operation.

In any case, the switching means 8 may be manually activated.

Along the circuit of the cooling refrigerant a liquid separator 15, a liquid receiver 16, a dehydrating filter 17, a four ways 18a, 18b, 8c, 18d cycle inversion valve 18, monodirectional valve 19, and electro-valves 20 are also present.

Along the circuit of the refrigerator a desuperheater 22, that is an exchanger 22 able to recovery part of the heat disposal, is also present.

In a preferred not shown embodiment the heat pump according to the invention may be a multi-purpose unit having, in addition to what cited above, an additional water exchanger for the users named recovery exchanger that may work either as an evaporator or as a capacitor according to the type of unit and the working mode.

The working principle is simple: when a simultaneous request of hot and cold water occurs, the multi-purpose unit takes heat from the environment to be cooled and pass it to the environment to be heated. If the heat amounts are not well balanced, the multi-purpose unit automatically utilizes a third heat source, being it air or water according to the models.

The maximum effects of the multi-purpose unit occur when there are simultaneous requests of cooling and heating because two useful results are obtained with a single energy consumption, with double performance and consequently saving in terms of cost management and reduced pollution,

The multi-purpose unit may be of the type adapted to a four ways air conditioning systems or of the type adapted to two pipes air conditioning systems.

In the multi-purpose unit for four ways systems, the heat exchanger 2 always act as an evaporator supplying cold water to the users, while the recovery exchanger always acts as a capacitor supplying hot water to the users.

In the multi-purpose unit for two pipes air conditioning systems, the heat exchanger 2 can act either as evaporator or as a capacitor supplying cold or hot water to the users, while the recovery exchanger always acts as a recovery supplying hot water to an additional user for example sanitary or of post-heating in an air treatment central. In summertime mode, the multi-purpose unit has the possibility of simultaneous and independent production of cold water in the primary circuit and hot water in the auxiliary circuit. On the other hand, in wintertime mode, the multi-purpose unit can manage the heat production on two circuits: heat supplying and utilization of hot sanitary water, according to the request of the two circuits and the priorities of the users.

Lastly, there is the possibility, for example for industrial users, that the multi-purpose unit works in a completely reverse mode by transferring heat from an environment to another one and viceversa: in this case, both the heat exchanger 2 and the recovery one can work either as evaporators or as capacitors by supplying hot or cold water to the two users according to their needs.

In the heat pump 1 according to the invention the electronic controller 14, for example a PLC, is in communication with probes for detecting one or more significant variables of the heat pump 1 and/or of the plant wherein it is installed. The variables can comprise one or more water and/or air temperatures in the first 2 and/or second 3 heat exchange unit, and/or one or more pressure and temperature significant points in the cooling system, and/or a water and/or air flow in the first 2 and/or second 3 heat exchange unit, and/or a mass flow of the refrigerant, and/or an electrical absorption of an electromechanical element of the heat pump 1, and/or an oil concentration in the refrigerant, and/or a physical atmospheric parameter (for example temperature, and/or pressure and/or atmospheric humidity): The controller (14) is thus able to automatically operate the switching means 8 with reference to the actual detected values of the variables being transmitted to it.

In such a way, the heat pump allows the user requests of heat and cool amounts by switching in automatic and/or manual way from acting as an air exchanger 6 to acting as a water exchanger 7 and viceversa always offering the best system performance intended as useful results (hot and/or cold water at the desired temperature) compared with the total energy consumption to get it.

The heat pump of the present invention has the maximum operating flexibility allowing the satisfaction of any user requests and needs.

It can contemporaneously and/or alternatively supply users which request hot and cold water at different temperature levels independently from the environment conditions, always with the maximum management efficiency, reliability, and self-adaptability.

It can supply hot water during wintertime also at temperatures lower than the operating limits of the traditional air heat pumps by using the water exchanger 7.

It can switch in automatic and/or manual way from working with the air exchanger 6 to working with the water exchanger 7 optimizing the whole performance of the implant according to the user needs, the environment conditions, the characteristic variables of the circuit.

In direct working it can selectively utilize the water exchanger 7 only avoiding the ice formation and the consequent inefficient deicing of the coils.

It can selectively utilize the air exchanger 6 only when a maintaining on the water exchanger 7 is needed or when it is not possible to utilize it for technical and legal reasons.

It can selectively utilize the water exchanger 7 only when a maintaining on the coils 10 or on the fans 11 is needed.

It offers better hot water supply to the users having the possibility to mitigate the deicing at the inversion of the cycle.

It can selectively utilize the water exchanger 7 only when a more noiseless is needed, for example during the night.

It can selectively utilize the air exchanger 6 only when it is not the proper time or is not convenient from an economical point of view to utilize the water of the water exchanger 7.

The reversible cycle heat pump according to the invention may be more in general of the type water-water or water-air, multi-purpose water-water or multi-purpose water-air.

The vapor compression reversible cycle heat pump thus designed may be subjected to numerous modifications and variants, all enclosed in the object of the inventive concept; in addition all the details may be replaced by technically equivalent elements.

In practice the materials used, and the dimensions too, will be chosen according to the needs and the technical art.

## Claims

1. Vapor compression reversible cycle heat pump (1) comprising at least a first heat exchange unit (2) between the cooling refrigerant and a first fluid destined for a user, said first heat exchange unit (2) being capable of operating as a condenser for transferring heat energy from said cooling refrigerant to said first fluid in the direct operating cycle of said heat pump (1), at least a second heat exchange unit (3) between said refrigerant and at least a second fluid having a temperature lower than said first fluid, said second heat exchange unit (3) being capable of operating as evaporator for transferring heat from said second liquid to said cooling refrigerant in the direct operating cycle of said heat pump (1), at least one compression unit (4) for said refrigerant, a cycle reversing valve (18) and at least one expansion unit (5) for said refrigerant, **characterized in that** said second heat exchange unit (3) comprises at least one air heat exchanger (6) comprising at least one coil (10) equipped with at least one fan (11), and at least one water heat exchanger (7) connected in parallel, and **in that** switching means (8) capable of alternatively and/or concurrently selecting said air heat exchanger (6) and/or said water heat exchanger (7) for executing said cycle are provided, said switching means (8) comprising a first intercepting valve (12) in the derivation of the circuit of said cooling refrigerant wherein said air heat exchanger (6) is located, and a second intercepting valve (13) in the derivation of the circuit of said cooling refrigerant wherein said water heat exchanger (7) is located, being further provided an electronic controller (14) in communication with said switching means (8) for their automatic operation, and at least one recovery exchanger for heat exchange between the cooling refrigerant and at least a third fluid destined for a user, said recovery exchanger being in communication with said first heat exchange unit (2) for the bidirectional heat energy transfer between said first and said third fluid.

2. Vapor compression reversible cycle heat pump (1) according to claim 1, **characterized in that** of consisting of a multi-purpose unit having a water recovery exchanger for users and being associated to an air conditioning system with four pipes, said first heat exchange unit (2) always functioning as an evaporator so as to provide cold water to users, said recovery exchanger always working as a condenser so as to provide hot water to users.

3. Vapor compression reversible cycle heat pump (1) according to any preceding claims, **characterized in that** said first heat exchange unit (2) comprises a water exchanger (9).

4. Vapor compression reversible cycle heat pump (1) according to any preceding claims, **characterized in that** said controller (14) is in communication with probes for detecting of one or more significant variables of said heat pump and/or of the system wherein it is installed, said variables comprising one or more water and/or air temperatures in said first and/or second heat exchange unit, and/or one or more significant pressure and temperature points in the cooling system, and/or a water and/or air flow in said first and/or second heat exchanger, and/or a flow of said refrigerant, and/or an electrical absorption of an electromechanical element of said heat pump, and/or an oil concentration in said refrigerant, and/or a physical atmospheric parameter, said controller (14) being able to automatically operate said switching means (8) with reference to the actual detected values for said variables.

5. Plant for supplying water to users **characterized in that** it comprises a heat pump according to any or more preceding claims.
